# EUROPEAN PATENT SPECIFICATION

(11) **EP 0 453 927 B1**
(45) Date of publication and mention of the grant of the patent: **13.07.1994**
(21) Application number: 91106055.6
(22) Date of filing: 16.04.1991
(51) Int. Cl.: F02M 31/12, F02M 53/06

(54) **Injection internal combustion engine with electric spark ignition**
Einspritzbrennkraftmaschine mit elektrischer Funkenzündung
Moteur à combustion interne à injection à allumage extérieur électrique

(30) Priority: 17.04.1990 NL 9000910
(43) Date of publication of application: 30.10.1991
(73) Proprietor: Texas Instruments Holland B.V., 7600 AA Almelo (NL)
(72) Inventor: Pelgrim, Robertus J., NL-7621 EB Borne (NL); Hulshof, Cornelis P., NL-7335 CP Apeldoorn (NL); Ploeg, Arie van der, NL-7642 VA Wierden (NL)
(74) Representative: Leiser, Gottfried, Dipl.-Ing.

(56) References cited:
- EP-A- 0 061 848
- EP-A- 0 248 503
- EP-A- 0 343 652
- DE-C- 3 426 469
- US-A- 4 378 001

## Description

The invention relates to an injection internal combustion engine with electric spark ignition, comprising at least one cylinder provided with an air inlet channel and, for each cylinder, at least one inlet valve fitted in the cylinder head, at least one fuel injector with a heating element with heat sink fitted downstream of said injector, and at least one PTC wafer provided thereon the heating element being fitted in an opening in the wall of the cylinder head or of the air inlet channel.

Such an internal combustion engine is known from DE-C-3426469 and NL-A-8801334.

It has been found that approximately 50% of the total exhaust gas emission is formed in the short period during which the engine has not yet reached its operating temperature. Even exhaust gas catalytic converters, which in normal circumstances reduce the exhaust gas emission by approximately 90% reach this degree of conversion only when the operating temperature of the catalytic converter has been reached. The conversion begins at a temperature of approximately 300°C, so that after a cold start there is little or no reduction at all in the exhaust gas emission of the engine in a catalytic converter. Since the temperature level is not high enough to vaporize the petrol/alcohol fuel, an additional quantity of fuel has to be added when the engine is cold in order to obtain a combustible mixture. This leads to a high exhaust gas emission. At low engine temperature both the fuel consumption and the exhaust gas emission are therefore relatively high. Heating the fuel/air mixture therefore makes a considerable contribution to the improvement of the environment and also achieves a considerable fuel saving, for less fuel or no additional fuel is injected. The fuel in the internal combustion engine mentioned in the preamble is sprayed onto the heating element, which is brought to the desired temperature in a short time, and is brought to the desired temperature in the process. The fuel will thereby vaporize better and better mixing with the combustion air is also achieved. The heating element is switched off when the engine is hot enough to take over the vaporization of the fuel.

In the case of the engine known from the above-mentioned DE-C-3426469 the heating element is designed in the form of a pipe projecting into the inlet channel of the cylinder and surrounded by an insulating tube. The pipe and the tube are provided with an end flange lying in a recess of the cylinder head and fixed through the air inlet pipe. A disadvantage of this engine is that fitting and replacement of the heating element is a time-consuming job. The same objection applies to the engine according to NL-A-8801334, in which the heating element is integrated in a plate wedged between the inlet channel and the cylinder head. This known engine also has a reduced air inlet cross-section.

US-A-4 378 001 discloses a fuel injection type carburetor for a multi-cylinder internal combustion engine comprising an air intake passage including a throttle body whose bottom portion is connected to a collecting portion of an intake manifold extending from the collecting portion to the cylinders. A throttle valve is arranged in a throttle bore of the throttle body, and a fuel injector is arranged on one side of the throttle bore at a location downstream of the throttle valve and inclined to direct a fuel jet onto an atomization promoting device, such as a PTC heater, which is mounted either in a recess provided on the opposite side of the throttle bore or in an opening provided in the collecting portion of the intake manifold. Thus, this prior art concerns the situation where a single injector and a single heater is used for more than one cylinder, and therefore the injector and the heater are at a considerable distance from the cylinders.

In contrast, in injection internal combustion engines of the type mentioned in the preamble, where a separate fuel injector and a separate heating element is used for each cylinder, each fuel injector is very close to the associated cylinder, and the heating elements, which must be located downstream of the injectors, are even closer to the cylinders and therefore not easily accessible for fitting and replacement.

The object of the invention is to provide an injection internal combustion engine of the type mentioned in the preamble, in which the heating element is easy to fit and replace, and where in the case of a multi-cylinder engine the heating elements can be replaced per cylinder.

According to the invention, the injection internal combustion engine mentioned in the preamble is to this end characterized in that the heating element is accomodated and retained in the opening of the wall of the cylinder head or of the air inlet channel by a circlip projecting into a groove in the wall, which circlip presses in bent leaf spring parts against spring action and presses the heating element against a shoulder in the wall of the opening.

The invention provides the advantage that each heating element, although being very close to the associated cylinder, is separately accessible for fitting and replacement from the outside without the necessity of dismounting the air intake channel from the cylinder head. Moreover, the heating element does not reduce the air inlet cross section.

An additional advantage is that the heating element can be added to existing engine designs and the number of cylinders does not matter.

Finally, by means of the circlip the heating element can be fitted easily and quickly in the opening in the wall of the cylinder head.

In a preferred embodiment, the heating element has a plastic contact carrier and a spring connected to an electric connecting element, which spring is fitted between the PTC wafer and the contact carrier, and in that the heat sink has at least two pins, each of which projects through an opening in a metal leaf spring with parts bent away from the plastic contact carrier and through an opening in a U-shaped fixing bracket, which brackets fall round the contact carrier and round the leaf spring.

The invention will now be explained in greater detail with reference to the figures.

Figure 1 shows a cross-section of a Dart of an internal combustion engine according to the invention in which a heating element is fitted in an opening in the cylinder head.

Figure 2 shows a cross-section of a part of an internal combustion engine in which a heating element is fitted in an opening in the air inlet pipe.

Figure 3 shows a cross-section through a heating device.

Figure 4 shows a view of said heating element viewed in the direction of the arrow in Figure 3.

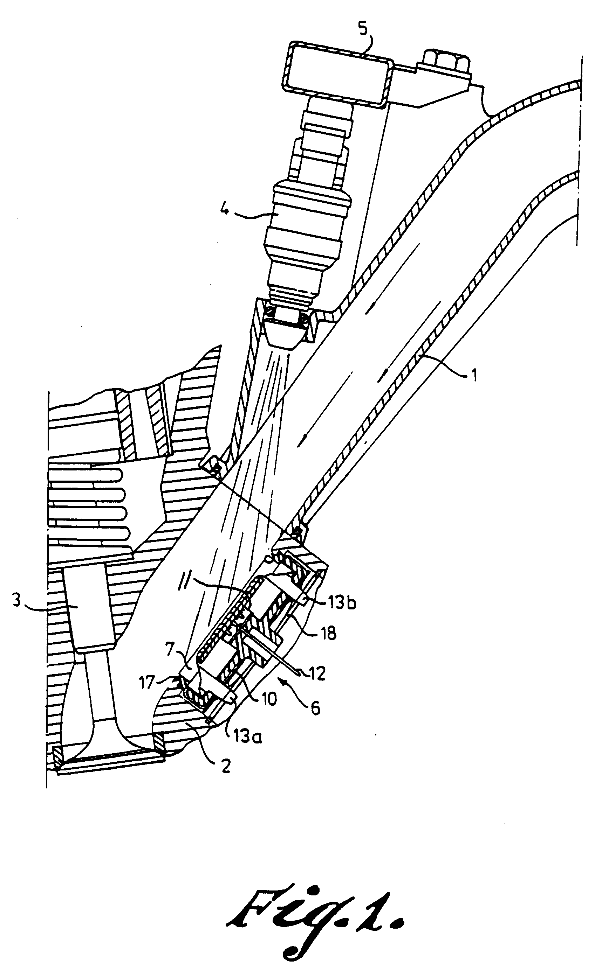

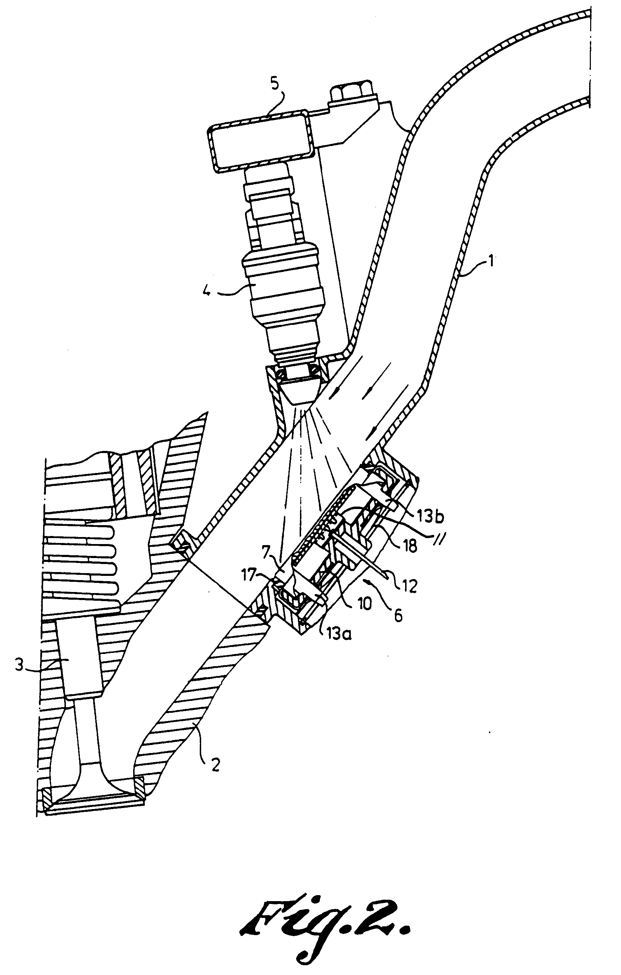

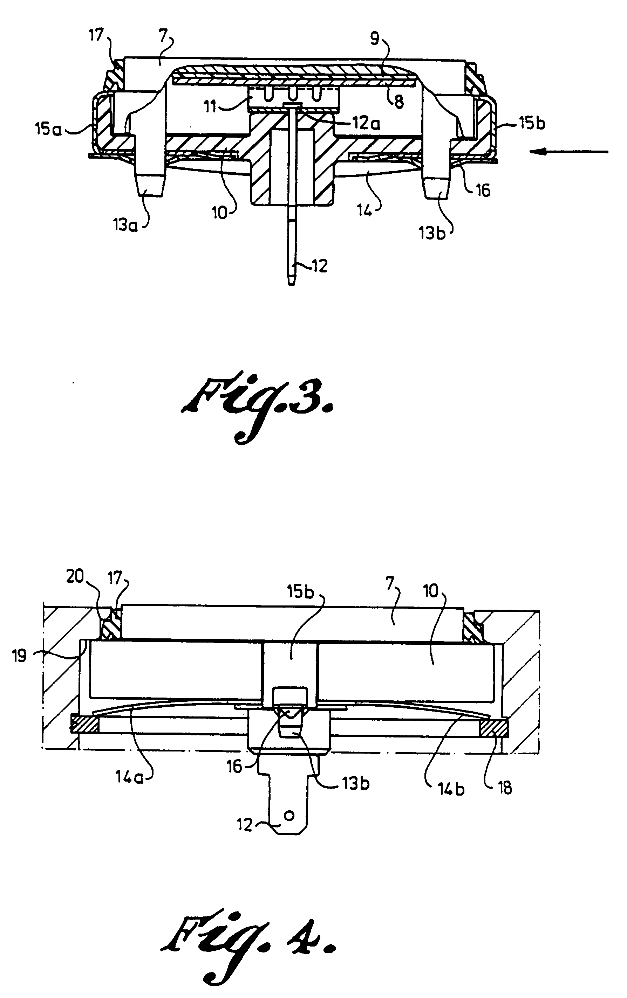

Each of the embodiments shown in Figures 1 and 2 relates to an injection engine with electric spark ignition, in which an air inlet channel 1 is fixed on a cylinder head 2 near the inlet valve 3. An injector 4 for injecting fuel is fixed on the channel 1 and is connected to a fuel supply 5.

In order to bring the fuel to the desired temperature when the engine is cold, it is sprayed during injection onto a heating element 6, which in Figure 1 is fitted in an opening in the wall of the cylinder head 2 and in Figure 2 is fitted in an opening in the wall of the air inlet channel 1.

The heating element has a heat sink 7 on which a thermistor wafer 8 with a positive temperature coefficient (PTC material) is bonded by means of a heat and electricity conducting adhesive 9. A contact carrier 10 made of insulating plastic and in the form of a round dish serves as the support for a metal leaf spring 11 which acts on the wafer 8 and is connected to an electric connecting lip 12 leading through the contact carrier. One end of said lip is deformed to a fixing head 12a.

The heat sink has two pins 13a, 13b, each projecting through an opening in the contact carrier 10, an opening in a leaf spring 14 to be described in further detail and an opening in one of two fixing brackets 15a, 15b. The leaf spring 14 has two parts 14a, 14b bent away from the contact carrier. Each of the U-shaped brackets 15a, 15b grips around the contact carrier and presses a flat part of the leaf spring 14 against the contact carrier. Slanting lips 16 engaging in a clamping manner on one of the pins 13a, 13b of the heat sink are fitted at the opening in the brackets 15a, 15b. A shaped sealing ring 17 is provided around the heat sink 7.

In order to fix the heating element in an opening in the wall of the cylinder head 2 or of an air inlet channel 1, a metal circlip 18 is placed in a groove in the wall of said opening while the leaf springs 14a, 14b are compressed, the sealing ring 17 being pressed into a shaped wall part 20 of the opening, and the edge of the contact carrier being pushed against a shoulder 19 in the wall of the opening.

A major advantage of the design of the heating element described is that all parts thereof are easy to assemble and can be fixed to each other without the use of screws, nuts and the like. Another advantage is the simple fitting by means of the circlip 18, where the leaves 14a, 14b of the leaf spring cause a suitable deformation of the sealing ring 17 and pressing of the contact carrier against the shoulder 19.

By connecting the contact lip to a power source (battery) electric voltage is applied over the PTC wafer 8 and heat is generated and transmitted via the heat sink to the petrol sprayed onto it. At a certain temperature the electrical resistance of the wafers has increased to such an extent that the temperature does not rise any further. An earth connection must be provided between the heat sink 7 and the wall of the cylinder head 2 or the inlet channel 1. The current runs from the contact lip 12 through the leaf spring 11, the wafers 8, the heat sink 7, the leaf springs 14a, 14b and the circlip 18 to the earth.

The surface of the heat sink 7 facing the interior of the cylinder head 2 or the inlet 1 can be of such a shape that the fuel sprayed onto it takes up the heat better from the heat sink. The shape can also be selected in such a way that the mixture flow is guided in the direction of the inlet valve.

## Claims

1. Injection internal combustion engine with electric spark ignition, comprising at least one cylinder provided with an air inlet channel (1) and, for each cylinder, at least one inlet valve (3) fitted in the cylinder head (2), at least one fuel injector (4) and a heating element (6) with heat sink (7) fitted downstream of said injector (4), and at least one PTC wafer (8) provided thereon, the heating element (6) being fitted in an opening in the wall of the cylinder head (2) or of the air inlet channel (1), characterized in that the heating element (6) is accomodated and retained in the opening of the wall of the cylinder head (2) or of the air inlet channel (1) by a circlip (18) projecting into a groove in the wall, which circlip presses in bent leaf spring parts (14a, 14b) against spring action and presses the heating element against a shoulder (19) in the wall of the opening.

2. Internal combustion engine according to claim 1, characterized in that the heating element (6) has a plastic contact carrier (10) and a spring (11) connected to an electric connecting element (12), which spring is fitted between the PTC wafer (8) and the contact carrier (10), and in that the heat sink (7) has at least two pins (13a, 13b), each of which projects through an opening in a metal leaf spring (14) with parts (14a, 14b) bent away from the plastic contact carrier (10) and through an opening in a U-shaped fixing bracket (15a, 15b), which brackets fall round the contact carrier (10) and round the leaf spring (14).

## Patentansprüche

1. Einspritz-Verbrennungskraftmaschine mit elektrischer Funkenzündung, mit wenigstens einem mit einem Lufteinlaßkanal (1) versehenen Zylinder und für jeden Zylinder wenigstens einem Einlaßventil (3), das in dem Zylinderkopf (2) angebracht ist, wenigstens einer Kraftstoffeinspritzdüse (4) und einem Heizelement (6) mit Wärmesenke (7), das in Strömungsrichtung hinter der Einspritzdüse (4) angebracht ist, sowie wenigstens einem an dem Heizelement vorgesehenen PTC-Plättchen (8), wobei das Heizelement (6) in einer Öffnung in der Wand des Zylinderkopfes (2) oder des Lufteinlaßkanals (1) befestigt ist, dadurch gekennzeichnet, daß das Heizelement (6) in einer Öffnung in der Wand des Zylinderkopfes (2) oder des Lufteinlaßkanals (1) aufgenommen und mittels eines Sicherungsringes (18) gehalten ist, der sich in eine Nut in der Wand erstreckt, wobei der Sicherungsring gebogene Blattfederteile (14a, 14b) entgegen deren Federwirkung nach innen drückt und das Heizelement gegen einen Absatz (19) in der Wand der Öffnung drückt.

2. Verbrennungskraftmaschine nach Anspruch 1, dadurch gekennzeichnet, daß das Heizelement (6) einen Kunststoffkontaktträger (10) und eine Feder (11) aufweist, die mit einem elektrischen Verbindungselement (12) verbunden und zwischen das PTC-Plättchen (8) und den Kontaktträger (10) eingesetzt ist, und daß die Wärmesenke (7) wenigstens zwei Stifte (13a, 13b) besitzt, von denen sich jeder durch eine Öffnung in einer Metallblattfeder (14) mit von dem Kunststoffkontaktträger (10) weggebogenen Teilen (14a, 14b) und durch eine Öffnung in einer U-förmigen Befestigungsklammer (15a, 15b) hindurch erstreckt, wobei die Klammern den Kontaktträger (10) und die Blattfeder (14) umgreifen.

## Revendications

1. Moteur à combustion interne à injection à allumage par étincelle électrique, comprenant au moins un cylindre pourvu d'une tubulure d'admission d'air (1) et, pour chaque cylindre, au moins une soupape d'admission (3) installée dans la culasse (2), au moins un injecteur (4) de carburant et un élément chauffant (6) comportant un puits de chaleur (7) agencé en aval du dit injecteur (4), et au moins une plaquette CTP (8) disposée sur cet élément chauffant, l'élément chauffant (6) étant installé dans une ouverture ménagée dans la paroi de la culasse (2) ou de la tubulure d'admission d'air (1), caractérisé en ce que l'élément chauffant (6) est logé et maintenu dans l'ouverture ménagée dans la paroi de la culasse (2) ou de la tubulure d'admission d'air (1) par un circlip (18) saillant dans une gorge ménagée dans la paroi, lequel circlip comprime des parties (14a, 14b) de ressort à lame cintré à l'encontre de l'action du ressort et force ledit élément chauffant contre un épaulement (19) agencé dans la paroi de l'ouverture.

2. Moteur à combustion interne selon la revendication 1, caractérisé en ce que l'élément chauffant (6) comporte un support de contacts (10) en matière plastique et un ressort (11) relié à un élément de raccordement électrique (12), ledit ressort étant installé entre la plaquette CTP (8) et le support de contacts (10), et en ce que le puits de chaleur (7) comporte au moins deux broches (13a, 13b), dont chacune s'étend à travers une ouverture ménagée dans un ressort à lame métallique (14) comprenant des parties (14a, 14b) cintrées en s'éloignant du support de contacts (10) en matière plastique, et à travers une ouverture ménagée dans une patte de fixation (15a, 15b) en forme de U, ces pattes étant pliées autour du support de contacts (10) et autour du ressort à lame (14).
